Europäisches Patentamt

European Patent Office

Office européen des brevets

(11) Numéro de publication: **0 253 035**
**A1**

## (12) DEMANDE DE BREVET EUROPEEN

(21) Numéro de dépôt: 86401596.1

(22) Date de dépôt: **17.07.86**

(51) Int. Cl.⁴: **A01N 65/00** , A01N 59/06 , //(A01N65/00,59:10,59:16,59:06)

(43) Date de publication de la demande:
**20.01.88 Bulletin 88/03**

(84) Etats contractants désignés:
**AT BE CH DE GB IT LI LU NL SE**

(71) Demandeur: **GOEMAR S.A.**
**Avenue du Général Patton Boîte Postale 55**
**F-35403 Saint Malo(FR)**

(72) Inventeur: **Herve, René**
**28 Chaussée du Silion**
**F-35400 Saint Malo(FR)**
Inventeur: **Chabot, René**
**50 rue Biroteau Laymonnière**
**F-85000 La Roche sur Yon(FR)**
Inventeur: **Percehais, Serge**
**21 Boulevard Léon Bourgeois**
**F-35000 Rennes(FR)**

(74) Mandataire: **Combe, André et al**
**CABINET BEAU DE LOMENIE 55, rue**
**d'Amsterdam**
**F-75008 Paris(FR)**

(54) **Produit à base d'algues, application comme fongicide ou bactéricide et procédé de traitement de plantes utilisant un tel produit.**

(57) Produit à base d'algues constitué d'une crème d'algues et de chlorure d'aluminium (AlCl₃).
De préférence, il est constitué de :
30 à 70% en poids de crème d'algues
70 à 30% en poids de AlCl₃
Application au traitement des maladies bactériennes et fongicides des plantes, notamment le mildiou des vignes.

EP 0 253 035 A1

## Produit à base d'algues, application comme fongicide ou bactéricide et procédé de traitement de plantes utilisant un tel produit.

La présente invention a pour objet un produit à base d'algues, l'application de celui-ci comme fongicide ou bactéricide et un procédé de traitement des plantes, notamment des vignes, contre les maladies en particulier cryptogamiques, comme le mildiou, ou bactériennes.

### Etat de la technique

Plusieurs produits sont déjà connus pour avoir une telle activité fongicide ou bactéricide sur les plantes. Brièvement, et de manière sans doute non exhaustive, on peut citer les documents suivants.

Le brevet français n° 2 308 312 décrit une composition fongicide contenant comme matière active au moins un composé choisi dans le groupe comprenant l'acide hypophosphoreux et ses sels minéraux.

Le brevet français n° 2 377 155 décrit une composition fongicide utile notamment contre le mildiou de la vigne contenant comme matière active un monoester de l'acide phosphoreux et un fongicide de contact choisi dans le groupe comprenant les composés à base de cuivre, les éthylènes-bis--dithiocarbamates métalliques et les dérivés de la phtalimide.

On connaît également le 2-cyano-N-(éthylaminocarbonyl)-2-(méthoxyimino)acétamide commercialisé par la firme américaine Du Pont de Nemours sous le nom de marque CYMOXANIL®. Son activité curative contre le mildiou est toutefois limitée par sa brève persistance d'action dans la plante.

Les brevets français n° 2 414 301 et n° 2 438 425 appartenant au déposant décrivent des compositions utilisables pour la lutte contre des maladies des plantes contenant comme principe actif une quantité efficace d'aluminium sous la forme de cations $Al^{+++}$ (FR. 2 414 301) éventuellement en combinaison avec des anions $Cl^-$ ou $PO_4^{---}$ et un carbamate.

Il a maintenant été découvert de manière surprenante que l'association, nouvelle en soi, de chlorure d'aluminium ($AlCl_3$) et d'une crème d'algues produisait un effet de synergie important dans la lutte contre les maladies bactériennes ou cryptogamiques des plantes, notamment le mildiou. Le produit peut éventuellement comporter d'autres cations métalliques, par exemple sous la forme de chlorure. Parmi ceux-ci, on peut citer les ions $Fe^{++}$, $Cu^{++}$, $Ti^{+++}$ et $Zr^{+++}$.

On appelle crème d'algues le filtrat obtenu selon le procédé décrit dans la demande de brevet français n° 83 19142. Cette crème pourra être également obtenue par lyophilisation ou par simple homogénéisation,mais avec de moins bons résultats. La demande n° 83 19142 n'étant pas publiée à cette date, on rappelle ci-après les principales caractéristiques de ce procédé. Les algues entières sont traitées par la combinaison des étapes suivantes :

a) cryobroyage (congélation des algues ou plantes coupées à -20/-50°C, puis broyage à cette température dans un broyeur à couteaux ou à dents, puis dans un ou plusieurs broyeurs à la température ambiante) donnant une bouillie de dimension de particules 100 à 50 ou 10 $\mu$;

b) broyage moléculaire;

c) décantation à grande vitesse;

d) ultrafiltration et récupération du filtrat liquide stérile ainsi obtenu.

On peut également utiliser le jus de décantation de l'étape c) appelé "protoexoplasma" comme produit à base d'algues.

Parmi les algues convenant pour la présente invention, on peut citer : Ulva, Enteromorpha, Laminaria, Cladophora, Rhodymenia, Chodium, Chondrus, Lomentaria, Fucus, Gastrocelonium, Spirulina, Ceramium, Bracchiomonas, Ectocarpus, Platymonia, Paonia, Ulothrix, Coradophylum, Alaria, Pelvetia, Himanthalia, Bifurcaria, Cystosera, Gelidium, Dilcea, Furcellaria, Cystoclonium, Gigartina, Callibepharis, Gracilaria, Paliara, Laurencia, Ascophyllum, Nodosum.

De préférence la crème d'algues doit être telle que l'analyse quantitative soit relativement proche de celle donnée à l'exemple 1 ci-après.

Selon l'utilisation du produit il est possible de faire varier les proportions relatives de crème d'algues et de chlorure d'aluminium à l'intérieur d'une fourchette très large. Toutefois, avantageusement, on préférera les proportions suivantes (en pourcentage en poids) :

90 à 10% de crème d'algues

10 à 90% d'aluminium

et de préférence 30 à 70 de crème d'algues et 70 à 30 de chlorure d'aluminium.

Le produit peut également contenir un fongicide, de préférence de contact. Parmi ceux-ci on peut citer : les composés à base de cuivre, les éthylènes-bis-dithiocarbamates métalliques comme l'éthylène-bis-dithiocarbamate de zinc et de manganèse ou "mancozebe". Le manèbe s'est révélé particulièrement intéressant. Les derivés de la phtalimide peuvent également être utilisés dans le cadre de l'invention. On pourra trouver une liste détaillée de ces fongicides de contact dans le brevet français n° 2 377 155.

De préférence le fongicide est utilisé avec le produit à base d'algues dans une proportion comprise entre 10% et 90% en poids par rapport au poids total crème d'algues et chlorure d'aluminium et de préférence entre 30 et 70%.

Les produits décrits ci-dessus se sont révélés d'excellents fongicides, notamment pour traiter le mildiou ou le botrytis des vignes ainsi que pour traiter l'excoriose, le black-rot ou le brenner. L'invention a également pour objet un procédé de traitement des plantes, notamment des vignes, contre les maladies, en particulier cryptogamiques et bactériennes, caractérisé en ce que l'on associe à ces plantes l'un des produits cités ci-dessus.

Le dépôt peut être effectué de manière diverse, mais on préférera la pulvérisation d'une solution, de préférence aqueuse.

Avantageusement, on utilisera 0,2 à 20 kg de produit à base d'algues par hectare de vigne et avantageusement entre 2 et 20 kg et mieux 6 et 12 kg.

L'exemple ci-dessous illustre l'invention.

Une crème d'algues préparée par cryobroyage, broyage moléculaire, décantation à grande vitesse et ultrafiltration répond à l'analyse quantitative suivante :

| | | |
|---|---|---|
| – Sodium (Na) | mg/kg | 1 210 |
| – Potassium (K) | " | 690 |
| – Calcium (Ca) | " | 450 |
| – Magnésium (Mg) | " | 20 000 |
| – Strontium (Sr) | " | 7 |
| – Plomb (Pb) | " | 8 |
| – Cadmium (Ca) | " | 0,85 |
| – Cuivre (Cu) | " | 550 |
| – Zinc (Zn) | " | 22 000 |
| – Fer (Fe) | " | 880 |
| – Manganèse (Mn) | " | 1 700 |
| – Etain (Sn) | " | $\leqslant 4$ |
| – Arsenic (As) | " | 1,0 |
| – Soufre ($SO_4$) | " | 142 000 |
| – Bore (B) | " | 58 |
| – Chlore (Cl) | " | 11 300 |
| – Iode (I) | " | 18 |
| – Fluore (F) | " | |
| – Azote (N) | " | 30 500 |
| – Phosphore (P) | " | 27 |
| – Brome (Br) | " | < 2 |

On mélange cette crème avec du chlorure d'aluminium de manière que l'on ait 300 g de crème d'algues, 293 g de AlCl₃ par litre.

Le liquide est mélangé, la plupart du temps lors de l'utilisation, avec 35 g de manèbe pour 100g de liquide. Ce produit est dilué dans l'eau à raison de 0,850 g/hl.

La solution est pulvérisée sur des vignes de type Sémillon contaminées par le parasite Plasmopora viticola. La contamination est effectuée avec des souches résistantes aux fongicides anilides:

a) sur les feuilles, au jour J (10 juin)

b) sur les grappes, au jour J + 33

Le traitement est effectué par pulvérisation à pression à jet projeté à raison de 1 000 l/ha, appareil à dos, tous les 14 jours de J-16 à J+55 environ.(La défeuillaison intervient à J+135).

On note ensuite :

-le pourcentage du nombre de grappes malades

-le pourcentage de dégâts moyens par grappe

-le pourcentage de dégâts sur le feuillage

La notation se fait selon la méthode statistique A-P-V. Les résultats sont réunis dans le tableau ci-après

## TABLEAU

| Traitements (doses kg ou l/ha) | Mildiou grappes J+75 | | | | Mildiou feuilles J+83 | | | | Mildiou feuilles J+103 | | | | Défeuillaison | |
|---|---|---|---|---|---|---|---|---|---|---|---|---|---|---|
| | Nbre grappes malades | | Dégâts | | Bas | | Haut | | Bas | | Haut | | | |
| | Bliss | p.cent | Note | p.cent | Note | p.cent | Note | p.cent | Note | p.cent | Note | p.cent | Note | p.cent |
| TEMOIN NON TRAITE | 90 | 100 | 7,03 | 85,30 | 7,03 | 93 | 9 | 97,5 | 7,92 | 94,40 | 9,25 | 98,12 | 7,67 | 92 |
| Mancozebe  0,350 | 66,52 | 84,10 | 1,83 | 4,65 | 2,16 | 7 | 5,83 | 66 | 2,92 | 14,20 | 8,08 | 95,25 | 2,67 | 12 |
| ⎧Produit à base  0,500⎫ ⎨d'algues  ⎬ ⎩Manèbe  0,175⎭ | 75,10 | 93,40 | 1,94 | 4,85 | 2 | 5 | 4,83 | 46 | 1,67 | 4,17 | 5,17 | 53,40 | 2,67 | 12 |
| F. calculé | 8,92 | | 54,92 | | 97,64 | | 17,18 | | 112,70 | | 32,30 | | 21,60 | |
| F. tables | 3,38 | | 3,38 | | 3,38 | | 3,38 | | 3,38 | | 3,38 | | 3,38 | |
| P P D S  P = 0,01 | 17,97 | | 0,99 | | 0,80 | | 1,18 | | 0,73 | | 0,90 | | 7,25 | |

PPDS : Plus petite différence significative

0 253 035

Le mildiou a envahi très gravement l'essai à la suite des contaminations artificielles à J et J +.33.

A J + 83, les parcelles non traitées prèsentaient 100% de grappes malades et près de 85% de dégâts. Le feuillage était également fortement atteint. A la fin d'août, il était pratiquement détruit.

Dans ces conditions très sévères, le mancozebe, produit de référence, assure une protection suffisante des grappes avec cependant un nombre de grappes malades relativement élevé dû à l'intervalle de 14 jours entre les traitements.

Le mélange produit à base d'algues + manèbe se comporte à peu près comme la référence pour la protection des grappes et des feuilles, mais il apparaît très nettement à l'examen des feuilles de l'extrémité des rameaux que le produit agit également à distance, peut-être par systémie. En effet, à J + 83 et plus nettement encore à J + 103, on observe une très bonne tenue du feuillage de l'extrémité des rameaux, avec une attaque de mildiou fortement réduite par rapport à celle des parcelles traitées avec le produit de référence.

**Revendications.**

1. Produit à base d'algues, caractérisé en ce qu'il est constitué d'une crème d'algues, de chlorure d'aluminium et éventuellement d'autres métaux sous la forme de leurs cations.

2. Produit à base d'algues selon la revendication 1, caractérisé en ce qu'il est constitué en pourcentage en poids de 10 à 90% de crème d'algues, 90 à 10% de chlorure d'aluminium.

3. Produit à base d'algues selon l'une des revendications 1 ou 2, caractérisé en ce qu'il contient un fongicide.

4. Produit à base d'algues selon la revendication 3, caractérisé en ce que le fongicide est un fongicide de contact.

5. Produit à base d'algues selon la revendication 4, caractérisé en ce que le fongicide de contact est le manèbe.

6. Produit à base d'algues selon l'une des revendications 3 à 5, caractérisé en ce que le fongicide est prèsent dans une proportion comprise entre 10% et 90% en poids par rapport au poids total crème d'algues et chlorure d'aluminium.

7. Application comme fongicidê d'un produit tel que décrit à l'une des revendications 1 à 6.

8. Procédé de traitement des plantes, notamment des vignes, contre les maladies, en particulier cryptogamiques et bactériennes, caractérisé en ce que l'on associe à ces plantes l'un des produits à base d'algues selon l'une des revendications 1 à 6.

9. Procédé de traitement selon la revendication 8, caractérisé en ce que le produit à base d'algues est déposé par pulvérisation.

10. Procédé de traitement selon l'une des revendications 8 ou 9, caractérisé en ce que l'on utilise 2 à 20 kg de produits à base d'algues par hectare.

**Office européen des brevets**

**RAPPORT DE RECHERCHE EUROPEENNE**

Numéro de la demande

EP 86 40 1596

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 576 749 (LAB. GOEMAR) <br> * En entier * <br><br> --- | 1-10 | A 01 N 65/00 <br> A 01 N 59/06 // <br> (A 01 N 65/00 <br> A 01 N 59:20 <br> A 01 N 59:16 <br> A 01 N 59:06 ) |
| A | EP-A-0 174 101 (MERCK & CO. INC.) <br> * Page 2, ligne 19 - page 4, ligne 3; revendications 1,3 * <br><br> --- | 1-10 | |
| D,A | FR-A-2 414 301 (SOC. ALGUES TEMZ-MOR) <br> * Revendications * <br><br> --- | 1,2,7-10 | |
| D,A | FR-A-2 438 425 (SOC. ALGUES TEMZ-MOR) <br> * Revendications * <br><br> --- | 1-10 | |
| D,A | WO-A-8 402 652 (LAB. GOEMAR) <br> * Revendications 1-4,7-9 * <br><br> --- | 1-10 | **DOMAINES TECHNIQUES RECHERCHES (Int. Cl.4)** <br><br> A 01 N |
| A | CHEMICAL ABSTRACTS, vol. 95, no. 17, 26 octobre 1981, page 336, résumé no. 147021c, Columbus, Ohio, US; K. BENDERLIEV et al.: "Coagulation of Chlorella vulgaris var. vulgaris Beijer with iron(III) chloride and aluminum chloride", & KHIDROBIOLOGIYA 1981, 13, 27-32 <br> * En entier * <br><br> --- -/- | 1,2 | |

Le présent rapport de recherche a été établi pour toutes les revendications

| Lieu de la recherche | Date d'achèvement de la recherche | Examinateur |
|---|---|---|
| LA HAYE | 13-02-1987 | FLETCHER A.S. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 891 756 (H. KASUGAI et al.)<br>* Revendications *<br><br>----- | 1-10 | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 13-02-1987 | FLETCHER A.S. |